# EUROPÄISCHE PATENTSCHRIFT

(11) **EP 3 587 810 B1**
(45) Veröffentlichungstag und Bekanntmachung des Hinweises auf die Patenterteilung: **23.12.2020**
(21) Anmeldenummer: 19181999.4
(22) Anmeldetag: 24.06.2019
(51) Int. Cl.: F04B 1/06, F04B 1/26, F04B 49/00, F04B 49/06, F16H 61/425, F16H 61/435

(54) **HYDROSTATISCHE AXIALKOLBENPUMPE FÜR EINEN HYDROSTATISCHEN FAHRANTRIEB**
HYDROSTATIC AXIAL PISTON PUMP FOR A HYDROSTATIC DRIVE
POMPE À PISTONS AXIAUX HYDROSTATIQUE POUR UN SYSTÈME D'ENTRAÎNEMENT HYDROSTATIQUE

(30) Priorität: 29.06.2018 DE 102018210694
(43) Veröffentlichungstag der Anmeldung: 01.01.2020
(73) Patentinhaber: Robert Bosch GmbH, 70442 Stuttgart (DE)
(72) Erfinder: Mutschler, Steffen, 89233 Neu-Ulm (DE); Lenzgeiger, Ulrich, 86424 Dinkelscherben (DE); Herrmann, Ronny, 89233 Neu-Ulm (DE); Mueller, Matthias, 89129 Langenau (DE)

(56) Entgegenhaltungen:
- EP-A1- 2 700 825
- WO-A1-93/12342
- DE-A1-102005 037 620
- FR-A2- 2 426 816
- JP-A- H1 122 632
- JP-A- H04 143 471

## Beschreibung

Die Erfindung betrifft eine hydrostatische Axialkolbenpumpe für einen hydrostatischen Fahrantrieb gemäß dem Oberbegriff des Patentanspruchs 1.

Es sind hydrostatische Fahrantriebe z.B. für mobile Arbeitsmaschinen bekannt, bei denen eine hydrostatische Axialkolbenpumpe und ein oder mehrere hydrostatische Motoren in einem geschlossenen hydraulischen Kreis miteinander verbunden sind. Die Pumpe wird von einem Verbrennungsmotor z.B. eine Dieselmotor angetrieben, und die Motoren treiben z.B. jeweilige Räder der mobilen Arbeitsmaschine an.

Die Axialkolbenpumpen derartiger Fahrantriebe sind oft in ihrem Hubvolumen verstellbar. Damit kann z. B. bei konstanter Drehzahl des Verbrennungsmotors der von der Axialkolbenpumpe geförderte Volumenstrom im geschlossenen Kreis verändert werden und damit eine Abtriebsdrehzahl der Motoren bzw. der Räder, also eine Fahrgeschwindigkeit der mobilen Arbeitsmaschine verstellt werden.

Aus dem Stand der Technik sind Ausgangsdrehzahlreglungen und Regler mit einer Rückführung der Verstellung des Hubvolumens der Axialkolbenpumpe (so genannte EP-Pumpen) bekannt. Im Falle von Axialkolbenpumpen in Schrägscheibenbauweise wird dabei ein Ist-Schwenkwinkel der Schrägscheibe rückgeführt.

Weiterhin sind aus dem Stand der Technik automatische drehzahlabhängige (DA) Verstelleinheiten für Axialkolbenpumpen bekannt, bei denen ein Regelventil einen Stelldruck erzeugt, der abhängig von der Antriebsdrehzahl der Axialkolbenpumpe und vom Arbeitsdruck im hydraulischen Kreis ist. Dieser Stelldruck wird durch ein elektromagnetisch betätigtes 4/3-Wegeventil dem Stellzylinder der Axialkolbenpumpe zugeführt. Durch die Abhängigkeit des Stelldrucks vom Arbeitsdruck ist eine Lastsensitivität gegeben, die nachteilig sein kann.

Das Dokument EP 2 700 825 offenbart ein Steuerungssystem für eine Hydraulikpumpe in einem Hydraulikkreislaufs.

Die DE 10 2005 037620 offenbart eine Regelvorrichtung für eine hydrostatische Kolbenmaschine mit einem Magnetventil, welches über eine Steuereinheit angesteuert wird und bei welchem die Position des Magneten mittels Sensoren ermittelt wird.

Der Erfindung die Aufgabe zu Grunde, eine Axialkolbenpumpe für einen Fahrantrieb zu schaffen, deren bzw. dessen Geschwindigkeitsteuerung lastunabhängig ist, wobei Regelungstechnik mit vorrichtungstechnisch aufwändiger Rückkopplung vermieden werden soll.

Diese Aufgabe wird gelöst durch eine Axialkolbenpumpe mit den Merkmalen des Patentanspruchs 1.

Weitere vorteilhafte Ausgestaltungen der Erfindung sind in den abhängigen Patentansprüchen beschrieben.

Die beanspruchte hydrostatische Axialkolbenpumpe ist vorzugsweise in Schrägscheibenbauweise ausgeführt und ist als Primäreinheit für einen hydrostatischen Fahrantrieb ausgelegt. Die Axialkolbenpumpe weist eine Verstelleinheit zur Verstellung ihres Hubvolumens auf. Die Verstelleinheit weist einen Stellzylinder mit einer ersten Stelldruckkammer auf, in der über ein erstes Druckreduzierventil ein erster Stelldruck einstellbar ist. Der Stelldruck ist abhängig von einer vorgewählten ersten Stromstärke an einem ersten Magneten des ersten Druckreduzierventils. Erfindungsgemäß wird die erste Stromstärke über eine elektronische Steuereinheit in Abhängigkeit von einer Ist-Drehzahl und von einem Arbeitsdruck der Axialkolbenpumpe und in (möglicherweise indirekter) Abhängigkeit von einem Bedienelement für den Fahrerwunsch berechnet. Das Bedienelement kann z.B. ein Fahrpedal der mobilen Arbeitsmaschine sein. Damit ist die erfindungsgemäße Axialkolbenpumpe für einen Fahrantrieb geeignet, deren bzw. dessen Geschwindigkeitsteuerung der betroffenen mobilen Arbeitsmaschine lastunabhängig ist. Verschiedene Modes einer Drehzahlsteuerung des Abtriebs des betroffenen Fahrantriebs sind möglich. Dabei ist kein Regler bzw. keine Regelungstechnik mit vorrichtungstechnisch aufwändiger Rückkopplung nötig.

Bei einer besonders bevorzugten Weiterbildung wirken im Pumpenbetrieb der erfindungsgemäßen Axialkolbenpumpe die Ist-Drehzahl und der erste Stelldruck in Richtung einer Vergrößerung des Hubvolumens oder des Schwenkwinkels, während der Arbeitsdruck in Richtung einer Verkleinerung des Hubvolumens oder des Schwenkwinkels wirkt.

Bei einer besonders bevorzugten Weiterbildung weist der Stellzylinder eine zweite Stelldruckkammer auf, die entgegen der ersten Stelldruckkammer wirkt, und in der über ein zweites Druckreduzierventil ein zweiter Stelldruck einstellbar ist. Dies geschieht für die beiden Stelldruckkammern unabhängig. Der zweite Stelldruck ist abhängig von einer vorgewählten zweiten Stromstärke an einem zweiten Magneten des zweiten Druckreduzierventils. Auch die zweite Stromstärke wird von der elektronischen Steuereinheit in Abhängigkeit von der Ist-Drehzahl und vom Arbeitsdruck der Axialkolbenpumpe und in Abhängigkeit vom Bedienelement berechnet. Damit wirkt der zweite Stelldruck in Richtung der Verkleinerung des Hubvolumens. In diesem Fall kann man die Differenz zwischen dem ersten Stelldruck und dem zweiten Stelldruck als wirksamen Stelldruckdifferenz bezeichnen. Damit ist die Axialkolbenpumpe auch erfindungsgemäß steuerbar, wenn sie in eine Motormodus übergeht, der durch einen Schleppbetrieb des betroffenen Fahrantriebs entstehen kann.

Bei einer besonders bevorzugten Weiterbildung ist das Druckreduzierventil oder sind die beiden Druckreduzierventile proportional, so dass der jeweilige Stelldruck proportional zur jeweiligen Stromstärke ist. Damit ist eine proportionale Geschwindigkeitssteuerung und es sind Proportionalfahrmodes möglich.

Bei einer besonders bevorzugten Weiterbildung ist in der Steuereinheit mindestens ein Kennfeld und/oder mehrere Kennlinien und/oder mindestens eine Formel hinterlegt, über das bzw. die die Stromstärke berechenbar ist, oder über das bzw. die die beiden Stromstärken berechenbar sind. In dem Kennfeld bzw. in den Kennlinien bzw. in der Formel sind physikalische Zusammenhänge (z.B. eine Leistungscharakteristik, druckabhängige Rückstellkräfte, Federkennlinien) der Axialkolbenpumpe hinterlegt oder abgebildet. Diese physikalischen Zusammenhänge können zuvor entweder an genau der Axialkolbenpumpe oder an einem baugleichen Exemplar ermittelt worden sein.

Bei einer besonders bevorzugten Weiterbildung ist über die elektronische Steuereinheit in einem Zwischenschritt ein Soll-Schwenkwinkel der Axialkolbenpumpe in Abhängigkeit vom Bedienelement modellbasiert berechenbar. Dann wird die Stromstärke oder werden die Stromstärken in Abhängigkeit dieses Soll-Schwenkwinkels und der Ist-Drehzahl und des Ist-Arbeitsdrucks berechnet.

Dabei kann der Soll-Schwenkwinkel anhand einer Volumenstrombilanz "Qₚₘₚ + Qₗₑₐₖ = Qₘₒₜ" berechenbar sein.

In der Steuereinheit kann auch ein leistungsgeführter Stelldruck berechenbar sein, der mit dem (drehzahlbasiert berechneten) ersten Stelldruck oder mit der Stellruckdifferenz minimal verknüpft ist minimal verknüpft ist. Damit sind die lastunabhängige Geschwindigkeitsteuerung und die verschiedenen Modes der Drehzahlsteuerung des Abtriebs des betroffenen Fahrantriebs mit gleichzeitiger Begrenzung der Leistung (z.B. als Überlastschutz) möglich. Damit ist weiterhin eine einfache Umsetzung einer Geschwindigkeitsbegrenzung bei leistungsgeführten Fahrantrieben möglich.

Mit einer Rückkopplung der Geschwindigkeit der mobilen Arbeitsmaschine kann ein Geschwindigkeitsregler (closed loop) gebildet werden. Dieser ist dann besonders stabil und robust und in der Lage Fehler der erfindungsgemäßen kennfeldbasierten oder formelbasierten Stelldrucksteuerung zu korrigieren, die z.B. durch Verschleiß der Axialkolbenpumpe entstehen können.

Ein Ausführungsbeispiel einer erfindungsgemäßen Axialkolbenpumpe ist in den Figuren dargestellt.

Es zeigen
Figur 1 einen Schaltplan des Ausführungsbeispiels der erfindungsgemäßen Axialkolbenpumpe,
Figur 2 eine erste Logik einer elektronischen Steuereinheit der Axialkolbenpumpe aus Figur 1,
Figur 3 eine weitere Logik der elektronischen Steuereinheit der Axialkolbenpumpe aus den vorhergehenden Figuren,
Figur 4 ein Kennfeld der elektronischen Steuereinheit der Axialkolbenpumpe aus den vorhergehenden Figuren,
Figur 5 eine Kennlinie der elektronischen Steuereinheit der Axialkolbenpumpe aus den vorhergehenden Figuren, und
Figur 6 ein Kennfeld der elektronischen Steuereinheit der Axialkolbenpumpe aus den vorhergehenden Figuren.

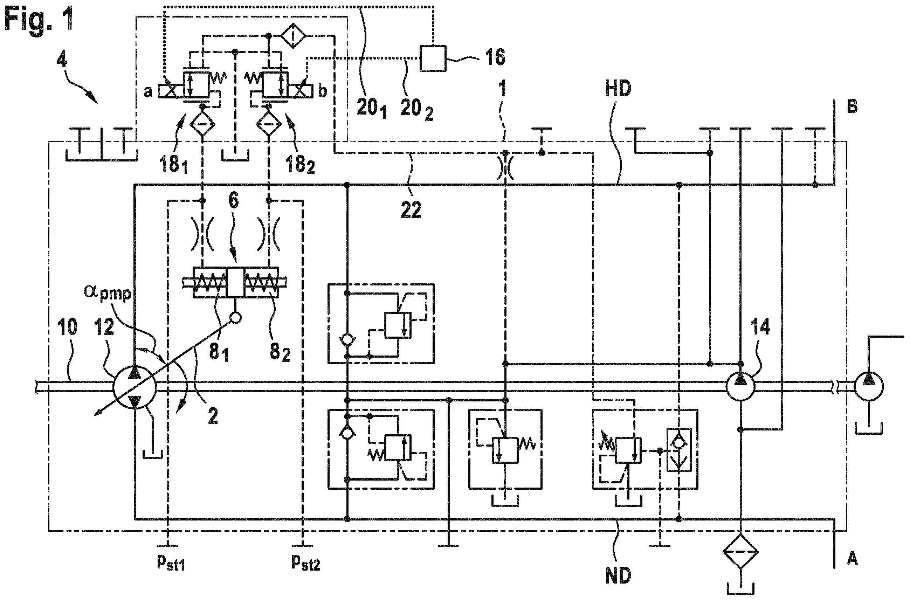

Figur 1 zeigt einen Schaltplan des Ausführungsbeispiels der erfindungsgemäßen Axialkolbenpumpe. Es werden nur die für die Erfindung wesentlichen Komponenten der Axialkolbenpumpe beschrieben. Sie hat ein Gehäuse 1, an dem zwei Arbeitsanschlüsse A, B gebildet sind, an die jeweils eine (nicht gezeigte) Arbeitsleitung eines geschlossenen Kreises angeschlossen wird. Damit ist ein Fahrantrieb für eine (nicht gezeigte) mobile Arbeitsmaschine gebildet.

Die Axialkolbenpumpe ist mit einer Schrägscheibe 2 ausgeführt, deren Schwenkwinkel αₚₘₚ über eine Verstelleinheit 4 einstellbar ist. Dazu dient ein doppeltwirkender Stellzylinder 6, der eine erste Stelldruckkammer 8₁ und eine dem entgegen wirkende zweite Stelldruckkammer 8₂ aufweist.

Ein erster Steuerdruck pₛₜ₁ wirkt in der ersten Stelldruckkammer 8₁ in Richtung einer Vergrößerung des Schwenkwinkels αₚₘₚ und damit in Richtung einer Vergrößerung des Hubvolumens Volₚₘₚ der Axialkolbenpumpe. Dem entgegen wirkt ein zweiter Stelldruck pₛₜ₂ in der zweiten Stelldruckkammer 8₂ in Richtung einer Verkleinerung des Schwenkwinkels αₚₘₚ und damit in Richtung einer Verringerung des Hubvolumens Volₚₘₚ der Axialkolbenpumpe. Dabei lässt sich eine Stelldruckdifferenz Δpₛₜ = pₛₜ₁ - pₛₜ₂ definieren, wobei diese Stelldruckdifferenz Δpₛₜ definitionsgemäß stets in Richtung einer Vergrößerung des Schwenkwinkels αₚₘₚ bzw. des Hubvolumens Volₚₘₚ wirkt.

Über eine Antriebswelle 10 der Axialkolbenpumpe wird deren Triebwerk 12 und darüber hinausgehend auch eine Speisepumpe 14 angetrieben. Die Antriebswelle 10 wird von einem (nicht gezeigten) Dieselmotor angetrieben und rotiert mit einer Drehzahl nₚₘₚ. Diese Drehzahl nₚₘₚ wirkt zusammen mit der Stelldruckdifferenz Δpₛₜ in Richtung einer Vergrößerung des Schwenkwinkels αₚₘₚ. Genauer gesagt wirkt eine Zunahme der Drehzahl nₚₘₚ auf diese Weise.

Wenn die gezeigte Axialkolbenpumpe über ihre Arbeitsanschlüsse A, B mehrere Fahrmotoren der mobilen Arbeitsmaschine versorgt, sei bei Vorwärtsfahrt B als der Hochdruckanschluss angenommen, so dass der mit dem Arbeitsanschluss B verbundene Kanal mit Hochdruck HD gekennzeichnet ist, während der andere mit dem Arbeitsanschluss A verbundene Kanal mit Niederdruck ND gekennzeichnet wird. Der Hochdruck HD, der auch als Arbeitsdruck bezeichnet wird, wirkt in Richtung einer Verringerung des Schwenkwinkels αₚₘₚ. Diese Zusammenhänge werden als Charakteristik der Axialkolbenpumpe bezeichnet und sind in einer elektronischen Steuereinheit 16 als Formeln und/oder als Kennfelder bzw. Kennlinien hinterlegt. Weiterhin werden die Drehzahl nₚₘₚ und die Stelldruckdifferenz Δpₛₜ und der Hochdruck HD gemessen. Damit lassen sich Betriebspunkte der erfindungsgemäßen Axialkolbenmaschine ansteuern, ohne dass dafür eine Rückkoppelung im Sinne eines Regelkreises notwendig ist.

Die beiden Stelldrücke pₛₜ₁, pₛₜ₂ werden über zwei Druckreduzierventile 18₁, 18₂ gesteuert. Diese haben jeweils einen elektrischen Magneten a, b, der über eine jeweilige elektrische Leitung 20₁, 20₂ mit der elektronischen Steuereinheit 16 verbunden sind. Die beiden Druckreduzierventile 18₁, 18₂ sind derart ausgelegt, dass der jeweilige Stelldruck pₛₜ₁, pₛₜ₂ proportional zur jeweiligen Stromstärke I₁, I₂ ist.

Die beiden Druckreduzierventile 18₁, 18₂ werden eingangsseitig über eine Speisedruckleitung 22 von der Speisepumpe 14 versorgt.

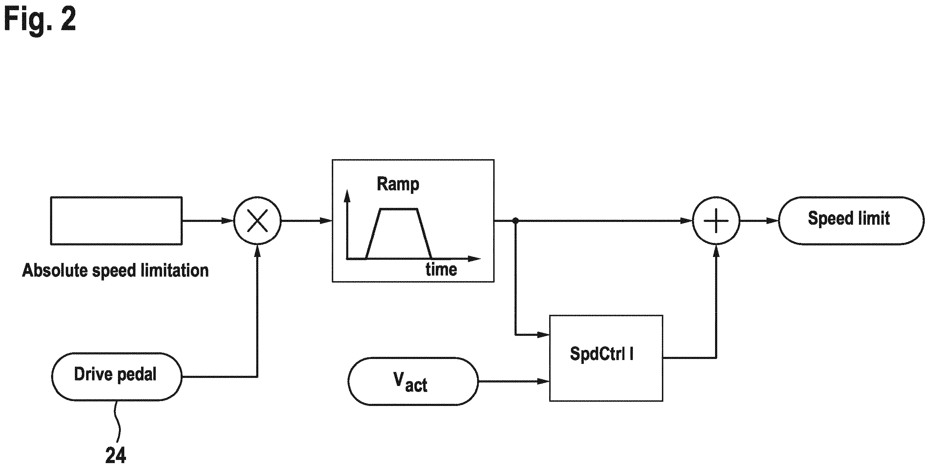

Figur 2 zeigt eine vorbereitende erste Logik der elektronischen Steuereinheit 16 aus Figur 1. Aus einer absoluten Geschwindigkeitsbegrenzung und aus der Stellung des als Fahrpedal ausgebildeten Bedienelements 24 wird eine Rampe über eine Zeit berechnet. Daraus wird unter Einbeziehung einer Ist-Geschwindigkeit vₐₖₜ der mobilen Arbeitsmaschine ein "Speed limit" berechnet.

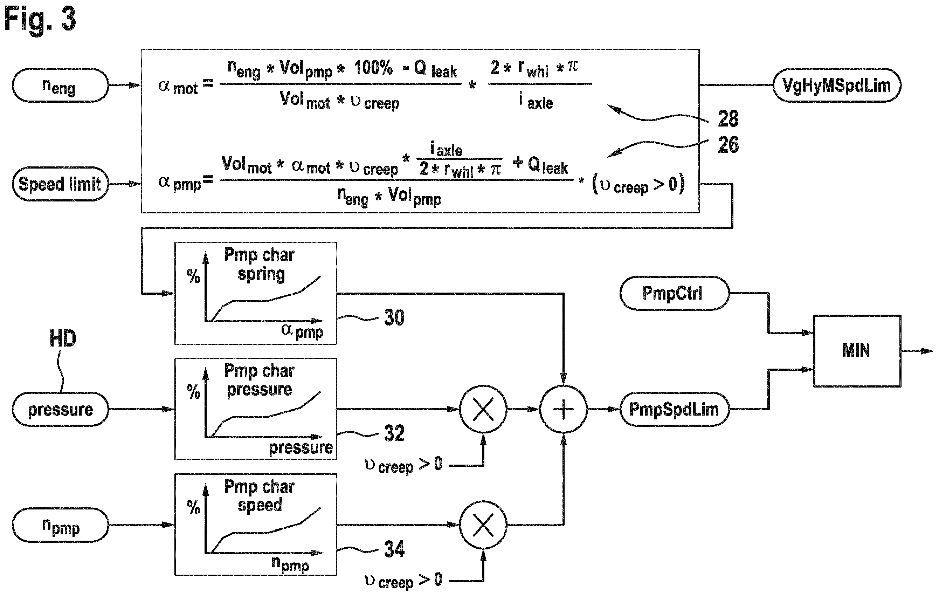

Gemäß Figur 3 wird der "Speed limit" zusammen mit einer Drehzahl n_{eng} des (nicht gezeigten) Verbrennungsmotors über eine Formel 26 in einen Soll-Schwenkwinkel αₚₘₚ der Axialkolbenpumpe umgerechnet.

Der oder die (nicht gezeigten) Hydromotoren des betroffenen Fahrantriebs sind entweder Konstantmotoren, oder der Schwenkwinkel αₘₒₜ wird gemäß der Formel 28 bestimmt und eingestellt.

"PmpSpdLim" wird durch einer Addition von drei Werten berechnet, die mit jeweiligen Kennlinien 30, 32, 34 ermittelt werden. Bei der ersten Kennlinie 30 wird der zuvor mit der Formel 26 berechnete Soll-Schwenkwinkel αₚₘₚ berücksichtigt. Bei der zweiten Kennlinie 32 wird der in der Arbeitsleitung anliegende Hochdruck HD berücksichtigt. Bei der dritten Kennlinie 34 wird die Ist-Drehzahl nₚₘₚ der Antriebswelle 10 (vgl. Figur 1) der Axialkolbenpumpe berücksichtigt.

Die Logik der Figuren 2 und 3 zeigt also die Berechnung des Soll-Schwenkwinkels αₚₘₚ auf Basis der Volumenstrombilanz Qₚₘₚ - Qₗₑₐₖ = Qₘₒₜ. Aus dem Soll-Schwenkwinkel αₚₘₚ wird über die Federkennlinie 30 und die hochdruckabbildende Kennlinie 32 ein Stelldruck ermittelt. Zusätzlich werden über die drehzahlabhängige Kennlinie 34 die drehzahlabhängigen Rückstellkräfte kompensiert. Statt dieser Kennlinien 30, 32, 34 können auch Formeln (Funktionsgleichungen) genutzt werden.

Der sich ergebende Stelldruck wirkt limitierend auf eine Pumpenansteuerung "PmpCtrl", die die Leistung als Überlastschutz begrenzt.

Der Sollwert für die Geschwindigkeit kann einfach aus dem Bedienelement 24 und der maximalen Geschwindigkeit berechnet werden. Zusätzlich wird die maximale Dynamik limitiert.

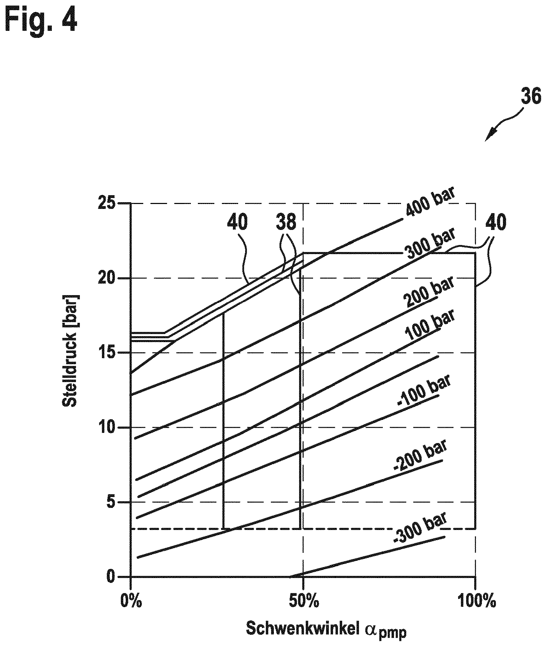

Figur 4 zeigt ein Kennfeld 36, in dem der Zusammenhang zwischen dem Schwenkwinkel αₚₘₚ (x-Achse) und dem ersten Stelldruck pₛₜ₁ bzw. der Stelldruckdifferenz Δpₛₜ (y-Achse) und dem Arbeitsdruck HD (Kurvenschar) abgebildet. Der gezeigte Zusammenhang dieser drei Werte basiert auf den realen physikalischen Gegebenheiten der Axialkolbenpumpe. Somit kann z. B. bei einem gegebenen Arbeitsdruck HD (z. B. 300 bar) zu einem über das Bedienelement ermittelten Soll-Schwenkwinkel αₚₘₚ (z. B. 50%) ein nötiger Stelldruck pₛₜ₁ oder eine Stelldruckdifferenz Δpₛₜ (bei diesem Beispiel ca. 17 bar) von der elektronischen Steuereinheit 16 ermittelt werden, um dazu proportional die Magneten a, b der beiden Druckreduzierventile 18₁, 18₂ mit der jeweiligen Stromstärke I₁, I₂ zu versorgen.

Weiterhin sind in Figur 4 die Grenzen einer Druckabschneidung 38 und die Grenzen einer Leistungsbegrenzung 40 dargestellt.

Aus Drehzahl nₚₘₚ und berechnetem Schwenkwinkel αₚₘₚ gemäß einer Pumpenkennlinie wird der maximal zulässige Stelldruck pₛₜ₁ bzw. die maximal zulässige Stelldruckdifferenz Δpₛₜ ermittelt, der bzw. die am Arbeitsanschluss A, B den maximal zulässigen Arbeits-Hochdruck HD bedingen würde. Wenn der gemäß Fahrerwunsch ausgegebene Stelldruck über diesem Stelldruck liegt, wird er begrenzt.

Wenn also der maximal zulässige Arbeitsdruck HD (z.B. 450bar) des Fahrantriebs erreicht wird, greift die Druckabschneidung ein und nimmt den Stelldruck pₛₜ₁ bzw. die Stelldruckdifferenz Δpₛₜ zurück. Dadurch kann auch bei weiter steigender Last eine Überschreitung des maximalen Arbeitsdrucks HD vermieden werden.

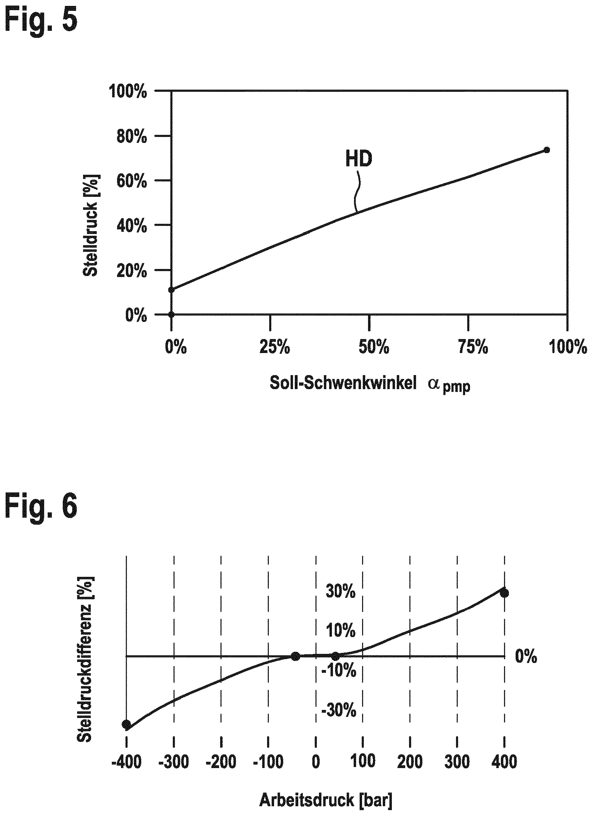

Figur 5 zeigt eine einzelne Kennlinie nach dem Prinzip des Kennfeldes aus Figur 4. Zu einem vorbestimmten Arbeitsdruck HD ist der zuvor beschriebene Zusammenhang zwischen dem Schwenkwinkel αₚₘₚ und dem Stelldruck pₛₜ₁ oder der Stelldruckdifferenz Δpₛₜ aufgezeigt.

Das Diagramm zeigt Federkräfte: Begrenzung der Winkelabhängigkeit.

Figur 6 zeigt eine einzelne Kennlinie, die den Zusammenhang zwischen dem Hochdruck HD der Axialkolbenpumpe (x-Achse) und der Stelldruckdifferenz Δpₛₜ am doppelt wirkenden Stellzylinder 6 darstellt. Dabei ist berücksichtigt, dass die Axialkolbenpumpe in einem Schleppbetrieb des betroffenen Fahrantriebs auch als Motor wirken kann. Damit ändert sich die Druckseite in der Axialkolbenpumpe, was mit den negativen Arbeitsdruck-Werten HD ausgedrückt ist. Dem entsprechend muss der zweite Stelldruck pₛₜ₂ den ersten Stelldruck pₛₜ₁ überwiegen, was mit den negativen Werten der Stelldruckdifferenz Δpₛₜ dargestellt ist.
1. Durch Betätigen des als Gaspedal ausgestalteten Bedienelements 24 erhöht der Fahrer die Drehzahl n_{eng} des Dieselmotors von Leerlauf auf Nenndrehzahl. Entsprechend der eDA Steuerung wird abhängig von der Drehzahl n_{eng} ein Ansteuersignal für die Druckreduzierventile 18₁, 18₂ bzw. deren ET Regler erzeugt. Bei Nenndrehzahl soll die maximale Fahrgeschwindigkeit erhalten werden, daher wird die Stelldruckdifferenz Δpₛₜ auf einen bestimmten Wert hochgestellt. Da noch keine Last vorhanden ist, schwenkt die Axialkolbenpumpe voll aus und liefert maximalen Volumenstrom Qₘₐₓ.
2. Durch die Fahrwiederstände stellt sich beim Fahren in der Ebene ein Lastdruck ein, z. B. 250bar (Q-Point, der Stelldruck bei Nenndrehzahl ist so eingestellt, dass die hydraulische Leistung P*Q jetzt der Nennleistung des Dieselmotors entspricht).
3. Bei höherer Last (z.B. Bergfahrt, Kiesaufnahme der mobilen Arbeitsmaschine) erhöht sich der Arbeitsdruck HD und die Axialkolbenpumpe schwenkt durch die Rückstellkräfte zurück. Die Stelldruckdifferenz Δpₛₜ im ET Regler wird aber von Druckreduzierventilen 18₁, 18₂ nicht reduziert.

Offenbart ist eine hydrostatische Axialkolbenpumpe für einen hydrostatischen Fahrantrieb mit einer Verstelleinheit zur Verstellung des Hubvolumens. Die Verstelleinheit hat einen Stellzylinder mit zwei gegeneinander wirkenden Stelldruckkammern. In jeder Stelldruckkammer ist über ein separates Druckreduzierventil ein Stelldruck einstellbar, der abhängig von und vorzugsweise proportional zu einer Stromstärke an einem jeweiligen Magneten des jeweiligen Druckreduzierventils ist. Die beiden Stromstärken sind über eine elektronische Steuereinheit in Abhängigkeit von einer Drehzahl und von einem Arbeitsdruck der Axialkolbenpumpe und in Abhängigkeit von einem Bedienelement für einen Fahrerwunsch, z.B. einem Fahrpedal, modellbasiert berechenbar. Prinzipiell lässt sich die Erfindung auch auf Axialkolbenpumpe mit nur einem einfach wirkenden Stellzylinder anwenden, wenn kein Schleppbetrieb gefordert ist, indem die Axialkolbenpumpe in einen Motormodus übergeht.

## Patentansprüche

1. Verfahren zur Verstellung eines Hubvolumens einer hydrostatischen Axialkolbenpumpe für einen hydrostatischen Fahrantrieb, wobei die Axialkolbenpumpe eine Verstelleinheit (4) zur Verstellung ihres Hubvolumens (Volₚₘₚ) aufweist, wobei die Verstelleinheit (4) einen Stellzylinder (6) mit einer ersten Stelldruckkammer (8₁) aufweist, in der über ein erstes Druckreduzierventil (18₁) ein erster Stelldruck (pₛₜ₁) einstellbar ist, der abhängig von einer ersten Stromstärke (I₁) an einem ersten Magneten (a) des ersten Druckreduzierventils (18₁) ist, **dadurch gekennzeichnet, dass** das Verfahren folgenden Schritt umfasst:
die erste Stromstärke (I₁) über eine elektronische Steuereinheit (16) in Abhängigkeit von einer Ist-Drehzahl (nₚₘₚ) und von einem Arbeitsdruck (HD) der Axialkolbenpumpe und in Abhängigkeit von einem Bedienelement (24) für einen Fahrerwunsch berechnet wird.

2. Verfahren nach Anspruch 1, wobei die Ist-Drehzahl (nₚₘₚ) und der erste Stelldruck (pₛₜ₁) in Richtung einer Vergrößerung des Hubvolumens (Volₚₘₚ) wirkt, während der Arbeitsdruck (HD) in Richtung einer Verkleinerung des Hubvolumens (Volₚₘₚ) wirkt.

3. Verfahren nach einem der vorhergehenden Ansprüche, wobei die Axialkolbenpumpe auch als Motor betreibbar ist, wobei der Stellzylinder (6) eine zweite Stelldruckkammer (8₂) aufweist, die entgegen der ersten Stelldruckkammer (8₁) wirkt, und in der über ein zweites Druckreduzierventil (18₂) ein zweiter Stelldruck (pₛₜ₂) einstellbar ist, der abhängig von einer zweiten Stromstärke (I₂) an einem zweiten Magneten (b) des zweiten Druckreduzierventils (18₂) ist, wobei die zweite Stromstärke (I₂) über die elektronische Steuereinheit (16) in Abhängigkeit von der Ist-Drehzahl (nₚₘₚ) und vom Arbeitsdruck (HD) der Axialkolbenpumpe und in Abhängigkeit vom Bedienelement (24) berechnet wird.

4. Verfahren nach einem der vorhergehenden Ansprüche, wobei das Druckreduzierventil oder die beiden Druckreduzierventile (18₁, 18₂) proportional ist bzw. sind, so dass der jeweilige Stelldruck (pₛₜ₁, pₛₜ₂) proportional zur jeweiligen Stromstärke (I₁, I₂) ist.

5. Verfahren nach einem der vorhergehenden Ansprüche, wobei in der Steuereinheit (16) ein Kennfeld (36) oder eine Formel (26) hinterlegt ist, über das bzw. die die Stromstärke (I₁) berechnet wird, oder über das bzw. die die Stromstärken (I₁, I₂) berechnet wird.

6. Verfahren nach einem der vorhergehenden Ansprüche, wobei über die elektronische Steuereinheit (16) in einem Zwischenschritt ein Soll-Schwenkwinkel (αₚₘₚ) der Axialkolbenpumpe in Abhängigkeit vom Bedienelement (24) modellbasiert berechnet wird.

7. Verfahren nach Anspruch 6, wobei der Soll-Schwenkwinkel (αₚₘₚ) anhand einer Volumenstrombilanz berechnet wird.

8. Verfahren nach einem der vorhergehenden Ansprüche, wobei in der Steuereinheit (16) ein leistungsgeführter Stelldruck berechenet wird, der mit dem ersten Stelldruck (pₛₜ₁) oder mit der Stelldruckdifferenz (Δpₛₜ) minimal verknüpft ist.

9. Verfahren nach einem der vorhergehenden Ansprüche, wobei eine Rückkopplung vorgesehen ist, womit ein Geschwindigkeitsregler gebildet ist.

## Claims

1. Method for adjusting a stroke volume of a hydrostatic axial piston pump for a hydrostatic traction drive, wherein the axial piston pump has an adjusting unit (4) for adjusting its stroke volume (Volₚₘₚ), wherein the adjusting unit (4) has an actuating cylinder (6) with a first actuating pressure chamber (8₁), in which a first actuating pressure (pₛₜ₁) can be set via a first pressure reducing valve (18₁), the said actuating pressure depending on a first current intensity (I₁) on a first solenoid (a) of the first pressure reducing valve (18₁), **characterized in that** the method comprises the following step:
the first current intensity (I₁) can be calculated via an electronic control unit (16) as a function of an actual rotational speed (nₚₘₚ) and of an operating pressure (HD) of the axial piston pump and as a function of an operating element (24) for a driver's request.

2. Method according to Claim 1, wherein the actual rotational speed (nₚₘₚ) and the first actuating pressure (pₛₜ₁) act in the direction of an increase in the stroke volume (Volₚₘₚ), while the operating pressure (HD) acts in the direction of a reduction in the stroke volume (Volₚₘₚ).

3. Method according to one of the preceding claims, wherein the axial piston pump can also be operated as a motor, wherein the actuating cylinder (6) has a second actuating pressure chamber (8₂), which acts counter to the first actuating pressure chamber (8₁), and in which a second actuating pressure (pₛₜ₂) can be set via a second pressure reducing valve (18₂), the said actuating pressure depending on a second current intensity (I₂) on a second solenoid (b) of the second pressure reducing valve (18₂), wherein the second current intensity (I₂) can be calculated via the electronic control unit (16) as a function of the actual rotational speed (nₚₘₚ) and of the operating pressure (HD) of the axial piston pump and as a function of the operating element (24).

4. Method according to one of the preceding claims, wherein the pressure reducing valve or the two pressure reducing valves (18₁, 18₂) is or are proportional, so that the respective actuating pressure (pₛₜ₁, pₛₜ₂) is proportional to the respective current intensity (I₁, I₂).

5. Method according to one of the preceding claims, wherein a characteristic map (36) or a formula (26) is stored in the control unit (16), via which map or formula the current intensity (I₁) is calculated, or via which map or formula the current intensities (I₁, I₂) are calculated.

6. Method according to one of the preceding claims, wherein a target pivoting angle (αₚₘₚ) of the axial piston pump can be calculated via the electronic control unit (16) in an intermediate step on a model basis as a function of the operating element (24).

7. Method according to Claim 6, wherein the target pivoting angle (αₚₘₚ) can be calculated by using a volume flow balance.

8. Method according to one of the preceding claims, wherein an output-guided actuating pressure, which is minimally linked with the first actuating pressure (pₛₜ₁) or with the actuating pressure difference (Δpₛₜ), can be calculated in the control unit (16).

9. Method according to one of the preceding claims, wherein feedback is provided, with which a speed controller is formed.

## Revendications

1. Procédé de réglage d'un volume de course d'une pompe hydrostatique à pistons axiaux destinée à un système de propulsion hydrostatique, la pompe à pistons axiaux comportant une unité de réglage (4) destinée à régler son volume de course (Volₚₘₚ), l'unité de réglage (4) comportant un cylindre de réglage (6) pourvu d'une première chambre de pression de réglage (8₁) dans laquelle une première pression de réglage (pₛₜ₁), qui dépend d'une première intensité de courant (I₁) au niveau d'un premier aimant (a) d'une première soupape de réduction de pression (18₁), peut être réglée par le biais de la première soupape de réduction de pression (18₁), **caractérisé en ce que** le procédé comprend l'étape suivante :
la première intensité de courant (I₁) est calculée par une unité de commande électronique (16) en fonction d'une vitesse de rotation réelle (nₚₘₚ) et d'une pression de travail (HD) de la pompe à pistons axiaux et en fonction d'un élément de commande (24) destiné à un souhait du conducteur.

2. Procédé selon la revendication 1, la vitesse de rotation réelle (nₚₘₚ) et la première pression de réglage (pₛₜ₁) agissant dans le sens de l'augmentation du volume de course (Volₚₘₚ), tandis que la pression de travail (HD) agit dans le sens de la réduction du volume de course (Volₚₘₚ) .

3. Procédé selon l'une des revendications précédentes, la pompe à pistons axiaux pouvant également fonctionner comme un moteur, le cylindre de réglage (6) comportant une deuxième chambre de pression de réglage (8₂) qui agit à l'opposé de la première chambre de pression de réglage (8₁) et dans laquelle une deuxième pression de réglage (pₛₜ₂), qui dépend d'une deuxième intensité de courant (I₂) au niveau d'un deuxième aimant (b) d'une deuxième soupape de réduction de pression (18₂), peut être réglée par la deuxième soupape de réduction de pression (18₂), la deuxième intensité de courant (I₂) étant calculée par l'unité de commande électronique (16) en fonction de la vitesse de rotation réelle (nₚₘₚ) et de la pression de travail (HD) de la pompe à pistons axiaux et en fonction de l'élément de commande (24).

4. Procédé selon l'une des revendications précédentes, la soupape de réduction de pression ou les deux soupapes de réduction de pression (18₁, 18₂) sont proportionnelles de sorte que la pression de réglage respective (pₛₜ₁, pₛₜ₂) est proportionnelle à l'intensité de courant respective (I₁, I₂).

5. Procédé selon l'une des revendications précédentes, un diagramme caractéristique (36) ou une formule (26) étant mémorisé(e) dans l'unité de commande (16) et permettant de calculer l'intensité de courant (I₁) ou les intensités de courant (I₁, I₂).

6. Procédé selon l'une des revendications précédentes, un angle de pivotement cible (αₚₘₚ) de la pompe à pistons axiaux étant calculé sur la base d'un modèle en fonction de l'élément de commande (24) par l'unité de commande électronique (16) dans une étape intermédiaire.

7. Procédé selon la revendication 6, l'angle de pivotement cible (αₚₘₚ) étant calculé sur la base d'un bilan de débit volumique.

8. Procédé selon l'une des revendications précédentes, une pression de réglage basée sur la puissance étant calculée dans l'unité de commande (16) et étant combinée au minimum à la première pression de réglage (pₛₜ₁) ou à la différence de pression de réglage (Δpₛₜ).

9. Procédé selon l'une des revendications précédentes, une rétroaction étant prévu pour former un régulateur de vitesse.
